# EUROPÄISCHE PATENTSCHRIFT

(11) **EP 2 050 981 B1**
(45) Veröffentlichungstag und Bekanntmachung des Hinweises auf die Patenterteilung: **30.05.2012**
(21) Anmeldenummer: 08165883.3
(22) Anmeldetag: 06.10.2008
(51) Int. Cl.: F16F 9/04

(54) **Luftfeder**
Pneumatic spring
Coussin d'air

(30) Priorität: 17.10.2007 DE 102007049684
(43) Veröffentlichungstag der Anmeldung: 22.04.2009
(73) Patentinhaber: ZF Friedrichshafen AG, 88038 Friedrichshafen (DE)
(72) Erfinder: Brosig, Hans-Georg, 97535 Wasserlosen-Kaisten (DE); Gubitz, Holger, 97422 Schweinfurt (DE); Nowotka, Thomas, 97539 Wonfurt (DE)

(56) Entgegenhaltungen:
- DE-A1-102004 061 989
- DE-C1- 10 037 026

## Beschreibung

Die Erfindung betrifft eine Luftfeder gemäß dem Oberbegriff von Patentanspruch 1.

Aus der gattungsbildenden DE 44 28 601 A1 ist eine Luftfeder mit einem Rollbalg bekannt, an dessen oberem Ende ein Deckel angeordnet ist. Der Deckel besteht aus Kunststoff und verfügt über eine außenseitige Metallverstärkung in Form einer einfachen Deckscheibe, die in eine kreisringförmige Tasche des Deckels eingelegt ist. Es besteht bei druckloser Luftfeder keine kraft- oder formschlüssige Verbindung zwischen dem Deckel und der metallischen Scheibe. Zwischen dem Außendurchmesser der metallischen Scheibe und dem Kunststoffdeckel besteht ein radialer Abstand, um unterschiedliches Wärmeausdehnungsverhalten beider Bauteile kompensieren zu können. Folglich muss bei der Montage des Deckels darauf geachtet werden, dass dieser korrekt mit der metallischen Scheibe verbaut wird. Eine Desachsierung des kolbenstangenseitigen Endes des Rollbalgs zum zylinderseitigen Ende kann nicht völlig ausgeschlossen werden. Der Deckel stützt sich nur durch die Druckkraft des Innendrucks an der Scheibe und damit an der Kolbenstange ab.

Die DE 100 37 026 C1 beschreibt eine Luftfeder mit einem Rollbalg, der an einem Deckel befestigt ist. Der vorzugsweise aus Kunststoff bestehende Deckel weist einen Boden mit einer Deckfläche und einen umlaufenden Rand auf. Der Deckel ist mit einer mindestens einfach radial geteilten Scheibe bestückt, die eine Dichtung am Deckel fixiert. Die Scheibe ist über eine Formschlussverbindung mit dem Deckel verbunden.

Die Aufgabe der vorliegenden Erfindung besteht darin, einen Luftfederdeckel mit einer Armierungsscheibe zu realisieren, die als vorgefertigte Baueinheit innerhalb des Fertigungsablaufs zur Verfügung steht.

Erfindungsgemäß wird die Aufgabe dadurch gelöst, dass die Armierungsscheibe über eine Formschlussverbindung mit dem Deckel verbunden ist.

Durch die feste Verbindung zwischen der Armierungsscheibe und dem Deckel wird sichergestellt, dass die Armierungsscheibe im Montageablauf keine Fehlstellung einnehmen kann. Des Weiteren wird die Belastbarkeit des gesamten Deckels im Vergleich zu einer einfachen Auflage der Armierungsscheibe erhöht.

In weiterer vorteilhafter Ausgestaltung der Erfindung ist die Formschlussverbindung als eine Bajonettverbindung ausgeführt. Mittels einer einfachen Verdrehbewegung zwischen dem Deckel und der Armierungsscheibe kann die Formschlussverbindung geschlossen werden, ohne dass es dazu einer erhöhten Kraft bedarf.

Bei einer ersten Variante ist die Armierungsscheibe topfförmig mit mindestens einer fensterförmigen Aussparung ausgeführt, in die mindestens ein Steg des Deckels eingreift. Die topfförmige Ausgestaltung führt zu einer wesentlichen Steigerung der Tragkraft des Deckels.

Gemäß einem vorteilhaften Unteranspruch ist die Aussparung in einem umlaufenden Ringsteg der Armierungsscheibe ausgeführt ist. Die auf den Deckel wirkende Belastung wird in einem Bereich aufgenommen, der außerhalb der Bajonettverbindung liegt.

Bei einer Alternativvariante weist die Armierungsscheibe mindestens ein randseitiges Segment auf, das eine Aussparung eines deckelseitigen dem Rollbalg abgewandten axial verlaufenden Ringes eingreift.

An dem Deckel kann vorteilhafterweise randseitig eine Stützhülse zur Rollfaltenbildung am Rollbalg fixiert sein.

Die Stützhülse lässt sich zu einem späteren Zeitpunkt im Montageablauf montieren, da die Stützhülse mittels einer Schnappverbindung mit dem Deckel verbunden ist.

Zur Steigerung der Betriebssicherheit kann vorgesehen sein, dass eine Öffnungssicherung ein ungewolltes Lösen der Formschlussverbindung verhindert.

Um insgesamt einfache Komponenten für den Deckel zu erreichen, wird die Öffnungssicherung von einem Formschlusselement der Bajonettverbindung gebildet.

Die Öffnungssicherung umfasst ein Rastprofil, das mit dem mindestens einen randseitigen Segmente der Armierungsscheibe zusammenwirkt.

Das Rastprofil wird von einem Sicherungssteg der Stützhülse gebildet, der in einen Schlitz des Deckels eingreift und damit den Vorteil bietet, dass die Einrastbewegung des Sicherungsstegs rechtwinklig zu einer Verdrehbewegung der Bajonettverbindung verläuft. Diese Anordnung eröffnet die Möglichkeit, den Kraftaufwand für das Einrasten der Öffnungssicherung völlig unabhängig von der Sicherungskraft gegen ungewolltes Öffnen der Bajonettverbindung zu bestimmen.

Anhand der folgenden Figurenbeschreibung soll die Erfindung näher erläutert werden.

Es zeigt:
- Fig. 1: Luftfeder in der Gesamtschau
- Fig. 2 - 5: Deckel mit Stützhülse
- Fig. 6 - 8: Weiterentwicklung der Variante nach Fig. 2 - 5 mit Öffnungssicherung
- Fig. 9 - 11: Alternativvariante zu den Fig. 2 - 8

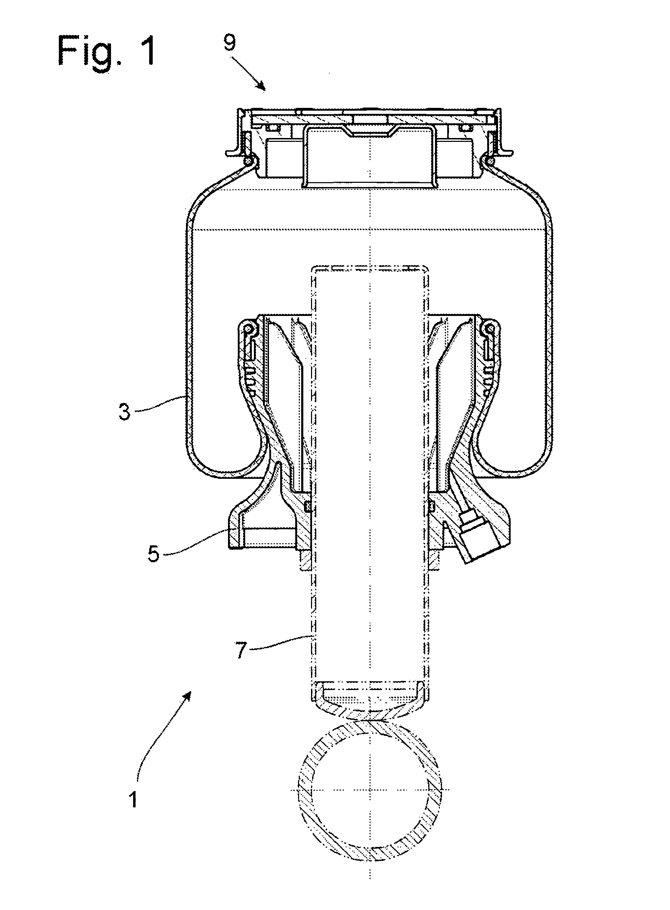

Die Figur 1 zeigt eine Luftfeder 1 mit einem Rollbalg 3, der an seinem unteren Ende an einem Abrollrohr 5 geklemmt ist. Das Abrollrohr 5 wiederum stützt sich auf einem gestrichelt dargestellten Zylinder 7 eines Schwingungsdämpfers ab, wobei die Luftfeder auch völlig unabhängig von einem Abrollrohr und/oder einem Schwingungsdämpfer verwendet werden kann.

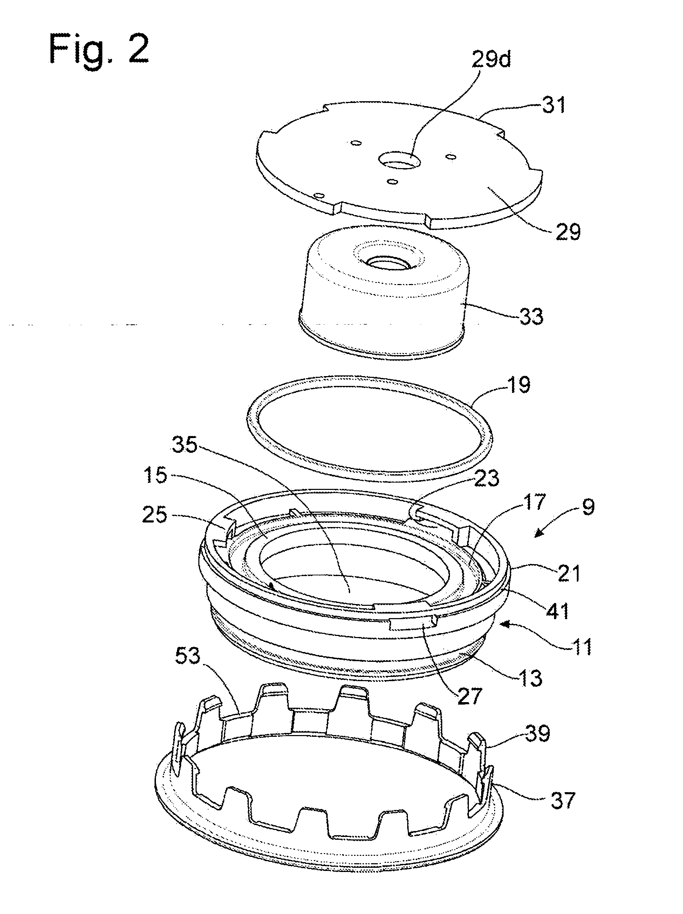

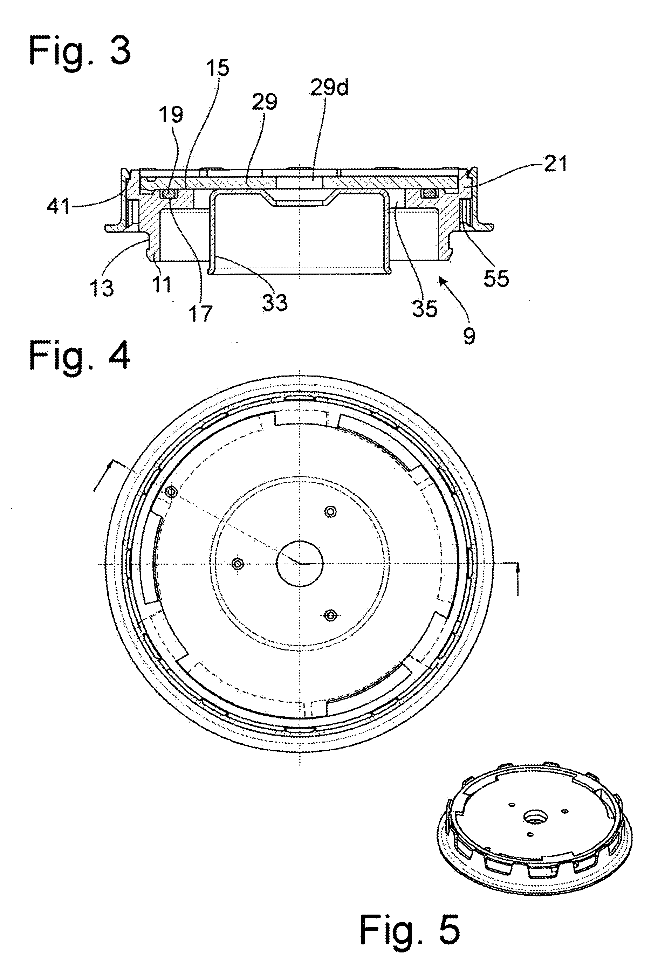

An einem oberen Ende des Rollbalgs 3 ist ein Deckel 9 befestigt, der in den Figuren 2 bis 5 näher im Detail dargestellt ist. Die Explosionsdarstellung nach Fig. 2 zeigt den Deckel 9 als ein Kunststoffbauteil mit einem umlaufenden Rand 11, in dem eine Nut 13 zur Fixierung des Rollbalgs 3 ausgeführt ist. In einer Deckfläche 15 eines Bodens ist eine Ringnut 17 für eine Ringdichtung 19 eingeformt. Auf der dem Rollbalg 5 abgewandten Seite des Deckels erstreckt sich ein axial verlaufender Ring 21. An seinem Innendurchmesser verfügt der umlaufende Ring 21 über mehrere Aussparungen 23, die von Winkelstegen 25 axial und einseitig in Umfangsrichtung begrenzt werden. Jede Aussparung ist radial an einem Fenster 27 im umlaufenden Ring 21 angeschlossen. Das Fenster 27 erleichtert wesentlich die spritztechnische Herstellung der Winkelstege 25, indem ein Schieberwerkzeug eingesetzt werden kann, das den umlaufenden Ring 21 durchdringt und dabei die Fenster erzeugt. Ein weiteres Spritzwerkzeugteil kann dann hinterschneidungsfrei die Winkelstege 25 abbilden. Alle Winkelstege 25 haben in Umfangsrichtung dieselbe Ausrichtung und sind auf einem gemeinsamen Teilkreis gleichmäßig verteilt angeordnet.

Der Deckel 9 trägt auf seiner Deckfläche 15 eine bevorzugt metallische Armierungsscheibe 29 mit randseitigen Segmenten 31. Die randseitigen Segmente weisen ein kleineres Bogenmaß auf als das Bogenmaß zwischen den Winkelstegen, so dass die Armierungsscheibe mit einer einfachen Axialbewegung in den umlaufenden Ring 21 des Deckels eingelegt werden kann. Die Armierungsscheibe 29 zentriert sich mit ihren randseitigen Segmenten am Innendurchmesser des umlaufenden Ringes 21.

An der Unterseite der Armierungsscheibe 29 kann direkt ein Stütztopf 33 für einen nicht dargestellten Anschlagpuffer befestigt, z. B. verschweißt, sein, da der Deckel 9 in diesem Bereich eine Durchgangsöffnung 35 aufweist. Der Stütztopf 33 verstärkt zusätzlich die Armierungsscheibe 29 und überträgt die auf ihn wirkenden Kräfte unter Umgehung des Deckels 9 direkt auf die Armierungsscheibe 29. Zwischen einem abgewinkelten Abschnitt des Stütztopfs und der Unterseite der Armierungsscheibe im Bereich einer zentralen Durchgangsöffnung 29d kann eine nichtdargestellte Ringdichtung eingelegt sein.

Optional kann an dem Deckel 9 randseitig eine Stützhülse 37 zur Rollfaltenbildung am Rollbalg fixiert sein. Die Stützhülse 37 ist mittels einer Schnappverbindung mit dem Deckel 9 verbunden. Dafür verfügt die Stützhülse 37 über eine Mehrzahl von sich axial erstreckenden Schnapphaken 39, die auf einem Absatz 41 des Deckels 9 ansetzen. Am Innendurchmesser der Stützhülse 37 sind jeweils zwischen benachbarten Schnapphaken axiale Haltefläche 53 ausgeformt, die an unteren Stützfläche 55 des umlaufenden Ringes 21 zur Anlage kommen. Diese wechselweise Anordnung der Schnapphaken und der axialen Halteflächen vereinfacht wiederum den Aufbau des Spritzwerkzeugs, da durch den Versatz der Schnapphaken zu den Halteflächen keine axiale Hinterschneidung auftritt, die ein Entformen der Stützhülse erschweren würde.

Bei der Montage des Deckels 9 wird die Armierungsscheibe 29 auf die Deckfläche 15 gelegt. Mittels einer Verdrehbewegung der Armierungsscheibe 29 zum Deckel 9 wird eine Formschlussverbindung zwischen den randseitigen Segmenten 31 und den Aussparungen 23 gebildet, so dass eine Bajonettverbindung vorliegt, die für eine handhabbare Baueinheit zwischen der Armierungsscheibe und dem Deckel sorgt. Selbst bei einer willkürlichen Bewegung der Baueinheit fallen die beiden besagten Bauteile nicht auseinander.

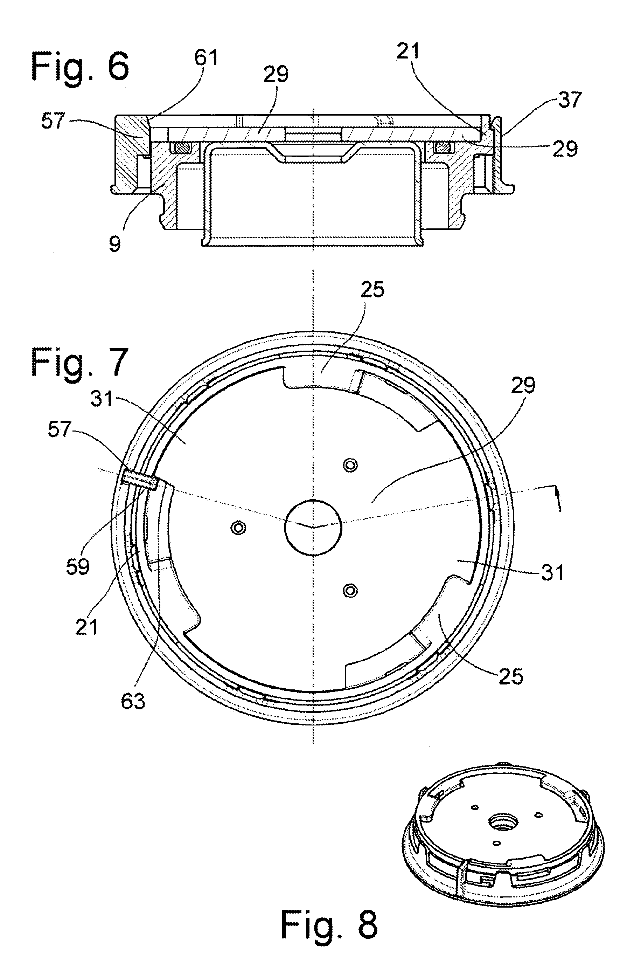

Die Fig. 6 bis 8 zeigen eine Variante eines Deckels 9 mit einer Armierungsscheibe 29, die auf der Ausführung nach den Fig. 2 bis 5 aufbaut. Zusätzlich verfügt der Deckel 9 über eine Öffnungssicherung, die ein ungewolltes Lösen der Formschlussverbindung zwischen den randseitigen Segmenten 31 und den Aussparungen bzw. den Winkelstegen 25 verhindert. Die Stützhülse 37 verfügt über ein Rastprofil in Form eines Sicherungsstegs 57, der mit mindestens einem randseitigen Segment 31 der Armierungsscheibe zusammenwirkt. In dem axial verlaufenden Ring 21 des Deckels 9 ist ein radialer Schlitz 59 ausgeführt, in dem der Sicherungssteg gleitend geführt ist und sich in beiden Umfangsrichtungen an den Seitenflächen des Schlitzes 59 abstützen kann. Wie aus der Fig. 6 ersichtlich ist, weist der Sicherungssteg 57 an seiner der Armierungsscheibe 29 abgewandten Stirnfläche eine nach radial außen weisende Formschräge 61 auf.

Bei der Montage wird die Armierungsscheibe 29 in den Deckel 9 gedrückt. Danach wird die Armierungsscheibe 29 in Richtung der Winkelstege 25 verdreht, bis die Segmente 31 der Armierungsscheibe an den Winkelstegen anliegen. Im weiteren Montageablauf wird die Stützhülse 37 in Umfangsrichtung orientiert auf den Deckel 9 gedrückt. In dieser Position gleitet der Sicherungssteg 57 in dem Schlitz 59 des umlaufenden Rings 21 nach radial innen und greift an dem Rücksprung 63 des Segments 31 an, so dass nun die Armierungsscheibe in beide Verdrehrichtungen durch den Sicherungssteg 57 einerseits und den Winkelsteg 25 andererseits gesichert ist.

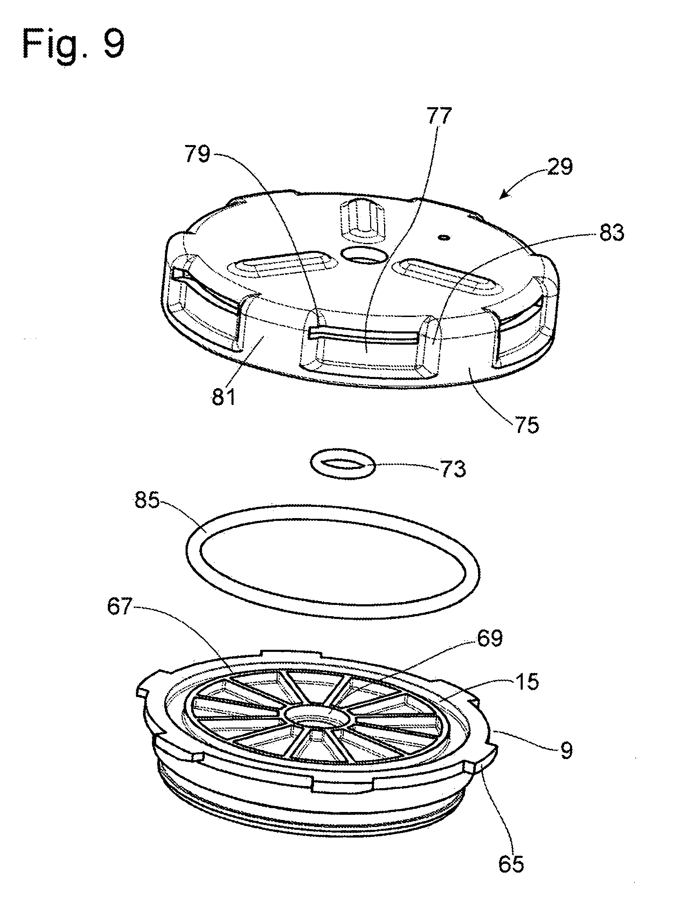

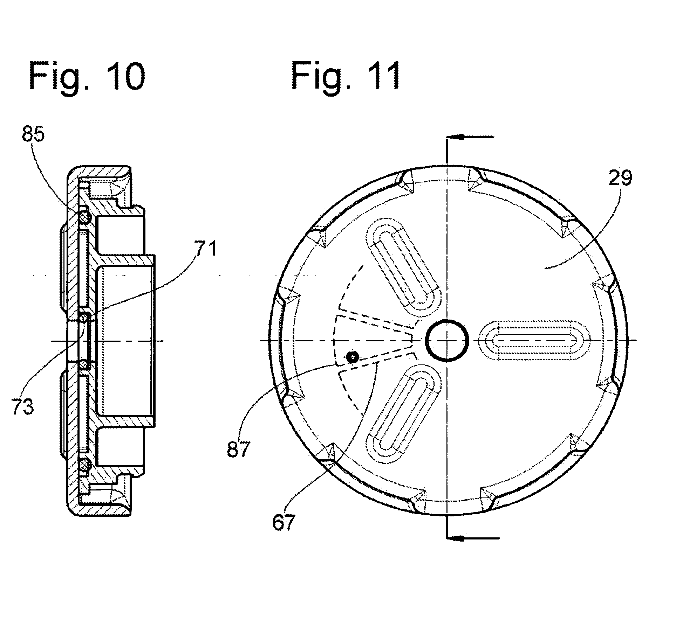

Die Figuren 9 bis 11 beschreiben eine Alternativvariante eines Deckels 9, der mit einer topfförmigen Armierungsscheibe 29 ausgeführt ist. Der Deckel verfügt über mindestens einen radial ausgerichteten randseitigen Steg 65. Die Deckfläche 15 des Deckels weist eine sternförmige Rippenstruktur 67 auf, die in einer zentralen Durchgangsöffnung 69 in eine Ringnut 71 für einen Dichtring 73 zusammengeführt ist. In einem umlaufenden Ringsteg 75 der Armierungsscheibe 29 sind fensterförmige Aussparungen 77 ausgeführt, die jeweils über einen in Umfangsrichtung verlaufenden Schlitz 79 mit einer in Axialrichtung verlaufenden Tasche 81 verbunden ist, dessen dem Schlitz 79 gegenüberliegende Seitenfläche 83 geschlossen ist.

Bei der Montage wird der Deckel 9 mit dem Dichtring 73 und einem weiteren Dichtring 85 in der Deckseite 15 bestückt. Auf den Deckel 9 wird die Armierungsscheibe 29 aufgelegt, wobei die randseitigen Stege 65 in die in Axialrichtung verlaufenden Taschen 81 eingreifen. Bei einer rotatorischen Relativbewegung zwischen der Armierungsscheibe 29 und dem Deckel 9 bewegen sich die randseitigen Stege 65 durch die Schlitze 79 in den Seitenflächen 83 in die fensterförmigen Aussparungen 77 und kommen an der geschlossenen Seitenfläche 83 zur Anlage. Damit liegt eine axiale Formschlussverbindung in der Bauform einer Bajonettverbindung zwischen der Armierungsscheibe 29 und dem Deckel 9 vor. In dieser Winkelposition der beiden Bauteile wirkt eine in Richtung der Deckfläche 15 geformte Einprägung 87 in der Armierungsscheibe mit der Rippenstruktur 67 in der Deckfläche 15 zusammen, so dass auch diese Variante eine Öffnungssicherung gegen ungewolltes Lösen vor.

## Patentansprüche

1. Luftfeder (1), umfassend einen Rollbalg (3), der an einem Deckel (9) befestigt ist, der einen Boden mit einer Deckfläche (15) und einen umlaufenden Rand (11) aufweist und aus Kunststoff besteht, wobei der Deckel (9) mit einer Armierungsscheibe (29) bestückt ist,
**dadurch gekennzeichnet,**
**dass** die Armierungsscheibe (29) über eine Formschlussverbindung mit dem Deckel (9) verbunden ist.

2. Luftfeder nach Anspruch 1,
**dadurch gekennzeichnet,**
**dass** die Formschlussverbindung als eine Bajonettverbindung ausgeführt ist.

3. Luftfeder nach Anspruch 1,
**dadurch gekennzeichnet,**
**dass** die Armierungsscheibe (29) topfförmig mit mindestens einer fensterförmigen Aussparung (77) ausgeführt ist, in die mindestens ein Steg (65) des Deckels (9) eingreift.

4. Luftfeder nach Anspruch 3,
**dadurch gekennzeichnet,**
**dass** die Aussparung (77) in einem umlaufenden Ringsteg (75) der Armierungsscheibe (29) ausgeführt ist.

5. Luftfeder nach Anspruch 1,
**dadurch gekennzeichnet,**
**dass** die Armierungsscheibe (29) mindestens ein randseitiges Segment (31) aufweist, das in eine Aussparung (23) eines deckelseitigen dem Rollbalg (3) abgewandten axial verlaufenden Ringes (21) eingreift.

6. Luftfeder nach Anspruch 1,
**dadurch gekennzeichnet,**
**dass** am Deckel (9) randseitig eine Stützhülse (37) zur Rollfaltenbildung am Rollbalg (3) fixiert ist.

7. Luftfeder nach Anspruch 6,
**dadurch gekennzeichnet,**
**dass** die Stützhülse (37) mittels einer Schnappverbindung mit dem Deckel (9) verbunden ist.

8. Luftfeder nach Anspruch 1,
**dadurch gekennzeichnet,**
**dass** eine Öffnungssicherung (57; 31; 67; 87) ein ungewolltes Lösen der Formschlussverbindung verhindert.

9. Luftfeder nach Anspruch 8,
**dadurch gekennzeichnet,**
**dass** die Öffnungssicherung von einem Formschlusselement (31) der Bajonettverbindung gebildet wird.

10. Luftfeder nach Anspruch 8,
**dadurch gekennzeichnet,**
**dass** ein Rastprofil (57) mit dem mindestens einen randseitigen Segmente (31) der Armierungsscheibe (29) zusammenwirkt.

11. Luftfeder nach Anspruch 10,
**dadurch gekennzeichnet,**
**dass** das Rastprofil von einem Sicherungssteg (57) der Stützhülse (37) gebildet wird, der in einen Schlitz (59) des Deckels (9) eingreift.

## Claims

1. Pneumatic spring (1), comprising a rolling bellows (3) which is fastened to a cover (9) which has a bottom, with a covering face (15), and a circumferential edge (11) and is composed of plastic, the cover (9) being fitted with a reinforcing disc (29), **characterized in that** the reinforcing disc (29) is connected to the cover (9) via a positively locking connection.

2. Pneumatic spring according to Claim 1, **characterized in that** the positively locking connection is configured as a bayonet connection.

3. Pneumatic spring according to Claim 1, **characterized in that** the reinforcing disc (29) is of cup-shaped configuration with at least one window-shaped cut-out (77), into which at least one web (65) of the cover (9) engages.

4. Pneumatic spring according to Claim 3, **characterized in that** the cut-out (77) is made in a circumferential annular web (75) of the reinforcing disc (29).

5. Pneumatic spring according to Claim 1, **characterized in that** the reinforcing disc (29) has at least one edge-side segment (31) which engages into a cut-out (23) of a cover-side, axially extending ring (21) which faces away from the rolling bellows (3).

6. Pneumatic spring according to Claim 1, **characterized in that** a supporting sleeve (37) is fixed on the edge side on the cover (9) for rolling-fold formation on the rolling bellows (3).

7. Pneumatic spring according to Claim 6, **characterized in that** the supporting sleeve (37) is connected to the cover (9) by means of a snap-action connection.

8. Pneumatic spring according to Claim 1, **characterized in that** an opening safeguard (57; 31; 67; 87) prevents unwanted release of the positively locking connection.

9. Pneumatic spring according to Claim 8, **characterized in that** the opening safeguard is formed by a positively locking element (31) of the bayonet connection.

10. Pneumatic spring according to Claim 8, **characterized in that** a latching profile (57) interacts with the at least one edge-side segment (31) of the reinforcing disc (29).

11. Pneumatic spring according to Claim 10, **characterized in that** the latching profile is formed by a securing web (57) of the supporting sleeve (37), which securing web (57) engages into a slot (59) of the cover (9).

## Revendications

1. Coussin d'air (1), comprenant un soufflet en U (3), qui est fixé sur un couvercle (9), qui présente un fond avec une surface de recouvrement (15) et un bord périphérique (11) et qui est constitué de plastique, le couvercle (9) étant muni d'un disque de renforcement (29),
**caractérisé en ce que**
le disque de renforcement (29) est connecté au couvercle (9) par le biais d'une liaison par engagement par correspondance géométrique.

2. Coussin d'air selon la revendication 1,
**caractérisé en ce que**
la liaison par engagement par correspondance géométrique est réalisée sous forme de liaison à baïonnette.

3. Coussin d'air selon la revendication 1,
**caractérisé en ce que**
le disque de renforcement (29) est réalisé en forme de pot avec au moins un évidement (77) en forme de fenêtre, dans lequel vient en prise au moins une nervure (65) du couvercle (9).

4. Coussin d'air selon la revendication 3,
**caractérisé en ce que**
l'évidement (77) est réalisé dans une nervure annulaire périphérique (75) du disque de renforcement (29).

5. Coussin d'air selon la revendication 1,
**caractérisé en ce que**
le disque de renforcement (29) présente au moins un segment (31) du côté du bord, lequel vient en prise dans un évidement (23) d'une bague (21) s'étendant axialement, opposée au soufflet en U (3), du côté du couvercle.

6. Coussin d'air selon la revendication 1,
**caractérisé en ce**
**qu'**une douille de support (37) pour la formation de plis de soufflet sur le soufflet en U (3) est fixée sur le couvercle (9) du côté du bord.

7. Coussin d'air selon la revendication 6,
**caractérisé en ce que**
la douille de support (37) est connectée au moyen d'une connexion par encliquetage au couvercle (9).

8. Coussin d'air selon la revendication 1,
**caractérisé en ce**
**qu'**une fixation d'ouverture (57 ; 31 ; 67 ; 87) empêche un desserrage indésirable de la connexion par engagement par correspondance géométrique.

9. Coussin d'air selon la revendication 8,
**caractérisé en ce que**
la fixation d'ouverture est formée par un élément d'engagement par correspondance géométrique (31) de la connexion à baïonnette.

10. Coussin d'air selon la revendication 8,
**caractérisé en ce**
**qu'**un profilé d'encliquetage (57) coopère avec au moins un segment (31) du côté du bord du disque de renforcement (29).

11. Coussin d'air selon la revendication 10,
**caractérisé en ce que**
le profilé d'encliquetage est formé par une nervure de fixation (57) de la douille de support (37) qui vient en prise dans une fente (59) du couvercle (9).
